Europäisches Patentamt

European Patent Office

Office européen des brevets

(19)

(11) Veröffentlichungsnummer: **0 138 267**
A2

# (12) EUROPÄISCHE PATENTANMELDUNG

(21) Anmeldenummer: **84201428.4**

(22) Anmeldetag: **05.10.84**

(51) Int. Cl.⁴: **B 65 D 43/04**, B 65 D 77/20

(30) Priorität: **18.10.83 IT 5383483 U**

(43) Veröffentlichungstag der Anmeldung: **24.04.85**
**Patentblatt 85/17**

(84) Benannte Vertragsstaaten: **AT BE CH DE FR GB IT LI NL SE**

(71) Anmelder: **UNILEVER NV, Burgemeester s'Jacobplein 1 P.O. Box 760, NL-3000 DK Rotterdam (NL)**
(84) Benannte Vertragsstaaten: **BE CH DE FR IT LI NL SE AT**

(71) Anmelder: **UNILEVER PLC, Unilever House Blackfriars P O Box 68, London EC4P 4BQ (GB)**
(84) Benannte Vertragsstaaten: **GB**

(72) Erfinder: **Zerhau, Walter, Billwerder Billdeich 441, D-2050 Hamburg 80 (DE)**
Erfinder: **Von Tempelhoff, Georg Friedrich, Fuchsweg 2, D-7913 Senden-Wullenstetten (DE)**

(74) Vertreter: **Keppels, Willem Richard Engelbertus Gerardus, Drs. et al, Unilever N.V. Patent Division P.O.Box 137, NL-3130 AC Vlaardingen (NL)**

(54) **Behälter mit Deckel.**

(57) Behälter (1) verschlossen mit einem Innenklemmdeckel (4), beide aus thermoplastischem Kunststoff, die mittels einer zwischen nach außen weisenden, wenigstens größtenteils ebenen Ringflanschen (2 bzw. 5) gebildeten Verbundschleife (6) mit einander verbunden sind und der Behälterringflansch (2) eine innerhalb der Verbundschleife (6) liegende Aufreißschwächungslinie (3) aufweist. Zwecks Erleichterung des Öffnens, auch bei Verwendung von zähem Kunststoffmaterial, ist der Deckelflansch (5) mit einer hauptsächlich zylindrischen, sich mit Spiel bis unterhalb des Behälterflansches (2) erstrekkenden Schürze (7) versehen.

## Behälter mit Deckel

Die Erfindung betrifft einen Behälter verschlossen mit einem Innenklemmdeckel, wobei der Deckel und der Behälter, die beide aus einem thermoplastischen Kunststoff hergestellt sind, mittels einer zwischen nach aussen weisenden, wenigstens grösstenteils ebenen Ringflanschen gebildeten Verbundschleife miteinander verbunden sind und der Behälterringflansch eine innerhalb der Verbundschleife liegende Aufreissschwächungslinie aufweist.

Derartige Behälter sind in der belgischen Patentschrift 872 051 beschrieben und dargestellt und finden, meistens aus sprödem Material wie Polystyrol hergestellt, allgemein Verwendung als becher- oder schachtelförmige Verpackungen für Lebensmittel. Diese Behälter sind leicht zu öffnen indem durch Biegungsbeanspruchung der Behälterringflansch die Schwächungslinie aufgerissen und sodann der Deckel entfernt wird. Bei Verwendung von weniger sprödem Material wie verschiedene propylenpolymerenenthaltende Kunststoffe vergrössert sich beim Biegen die Reissfestigkeit des Materials und wird das Oeffnen ohne Hilfsmittel schwierig bzw. unmöglich. Auch die Anordnung einer Aufreisslasche, wie an sich aus obiger belgischen Patentschrift ebenfalls bekannt, bietet keine Aushilfe.

Aufgabe der Erfindung ist auf einfacher und billiger Weise das Oeffnen der anfangs beschriebenen Behälter zu erleichtern auch wenn diese Behälter aus zähem oder zäh, werdendem Material hergestellt sind. Eine weitere Aufgabe der Erfindung ist die verletzbare Aufreissschwächungslinie gegen unbeabsichtigt Reissen zu schützen.

Zur Lösung dieser Aufgabe sieht die Erfindung vor, dass der Deckelflansch mit einer hauptsächlich zylindrischen, sich mit Spiel bis unterhalb des Behälterflansches erstreckenden Schürze versehen ist.

In einer bevorzugten Ausführungsform ist die Schürze am unteren Rande leicht auswärts gebogen.

In einer zusätzlich vorgezogenen Ausführungsform erstreckt die Schürze sich wenigstens 1,5 mm unterhalb der Unterfläche des Behälterflansches.

Ein zuverlässiger Schutz gegen Stösse wird erzielt, wenn das Spiel zwischen dem Aussenrand des Behälterflansches und der Innenseite der Schürze wenigstens 0,5 mm beträgt.

Die Erfindung wird im Nachfolgenden anhand einiger Bilder bevorzugter Ausführungsformen der Erfindung erläutert.

Es zeigen:

Fig. 1   im Perspektiv den Oberteil eines erfindungsgemässen Bechers

Fig. 2   einen Detailschnitt entlang der Linie II-II in Fig. 1, und

Fig. 3   einen Detailschnitt durch einen alternativen Ausführungsform.

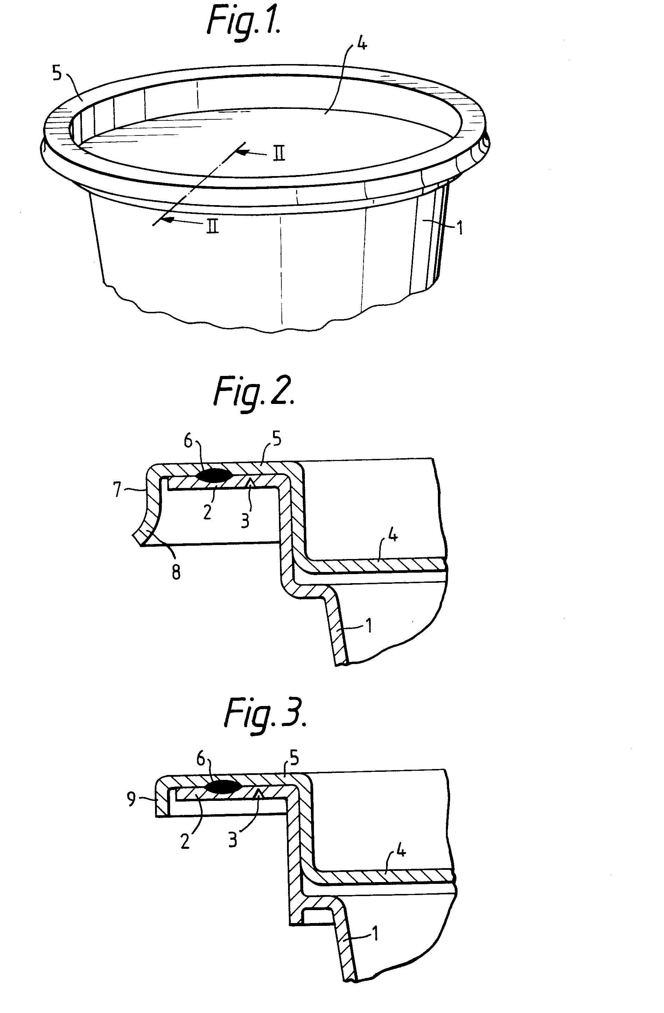

Der in Fig. 1 und 2 dargestellte Becher 1 weist einen Ringflansche 2 auf, der mit einer Aufreissschwächungslinie 3 oder -kerbe versehen ist. Dieser Becher ist mit einem Innenklemmdeckel 4 verschlossen, indem dieser Deckel mit einem Ringflansch 5 versehen ist, der z.B. durch Ultraschall mit dem Ringflansch 2 des Bechers verschweisst ist unter Bildung einer geschlossenen

0138267
U 7(·04 (R)

Verbundschleife 6 die ausserhalb der Schwächungslinie liegt.

Am Aussenrand des Deckelflansches 5 ist eine abwärts gerichtete, hauptsächlich zylindrische Schürze 7 vorgesehen, die sich bis unterhalb der Unterfläche des Becherflansches 2 erstreckt.

Zwischen der Schürze 7 und dem Becherflansch ist genügend Spiel anwesend, damit auf die Schürze einwirkende Stösse nicht unmittelbar auf den Becherflansch einwirken. Dieser Effekt kann noch verbessert werden, indem die Schürze am unteren Rande 8 leicht auswärts gebogen ist, wie in Fig. 2 dargestellt.

In Fig. 3 ist eine Ausführungsform gezeigt, nach der die Schürze 9 kürzer und nicht auswärts gebogen ist.

PATENTANSPRUECHE

1.      Behälter verschlossen mit einem Innenklemmdeckel, wobei der Deckel und der Behälter, die beide
aus einem thermoplastischen Kunststoff hergestellt
sind, mittels einer zwischen nach aussen weisenden,
wenigstens grösstenteils ebenen Ringflanschen
gebildeten Verbundschleife miteinander verbunden sind
und der Behälterringflansch eine innerhalb der Verbundschleife liegende Aufreissschwächungslinie aufweist,
dadurch gekennzeichnet, dass der Deckelflansch (5) mit
einer hauptsächlich zylindrischen, sich mit Spiel bis
unterhalb des Behälterflansches (2) erstreckenden
Schürze (7 bzw 9 ) versehen ist.

2.      Behälter nach Anspruch 1, dadurch gekennzeichnet, dass die Schürze am unteren Rande (7) leicht
auswärts gebogen ist.

3.      Behälter nach Anspruch 1 oder 2, dadurch gekennzeichnet, dass die Schürze sich wenigstens 1,5 mm
unterhalb der Unterfläche des Behälterflansches (2)
erstreckt.

4.      Behälter nach Anspruch 1, 2 oder 3, dadurch
gekennzeichnet, dass das Spiel zwischen dem Aussenrand
des Behälterflansches und der Innenseite der Schürze
wenigstens 0,5 mm beträgt.

1/1

0138267

Fig.1.

Fig.2.

Fig.3.